# EUROPÄISCHE PATENTSCHRIFT

(11) **EP 2 811 277 B1**
(45) Veröffentlichungstag und Bekanntmachung des Hinweises auf die Patenterteilung: **14.12.2016**
(21) Anmeldenummer: 14177548.6
(22) Anmeldetag: 21.12.2011
(51) Int. Cl.: B21B 38/08, G01L 5/04, B21B 38/02, G01L 5/00

(54) **Kraftsensorsystem und Verfahren zum Messung von Kräften und Folien- oder Blechbändern beim Walzen**
Force sensor system and method for measuring forces of film strips or sheet metal strips during rolling
Système de capteurs dynamométriques et procédé de mesure de forces de rubans de film ou de tôle lors du calandrage

(30) Priorität: 22.12.2010 CH 21452010
(43) Veröffentlichungstag der Anmeldung: 10.12.2014
(62) Teilanmeldung aus: 11804913.9
(73) Patentinhaber: VDEh-Betriebsforschungsinstitut GmbH, 40237 Düsseldorf (DE)
(72) Erfinder: Thiel, Rolf, 8400 Winterthur (CH); Müller, Ulrich, 40789 Monheim (DE); Mücke, Gert, 40724 Hilden (DE)
(74) Vertreter: König Szynka Tilmann von Renesse Patentanwälte Partnerschaft mbB

(56) Entgegenhaltungen:
- EP-A2- 1 048 370
- WO-A1-2004/065924
- US-A- 4 024 755
- US-B2- 6 722 194

## Beschreibung

### Technisches Gebiet

Die Erfindung betrifft ein Verfahren zum Messen der Planheit eines Folien- oder Blechbandes, während es in Walzgerüsten gewalzt wird, mittels eines Kraftsensorsystems.

### Stand der Technik

Verfahren oben beschriebener Art werden beispielsweise bei der Ermittlung der Planheit von Bändern bei der Bearbeitung in Bandprozesslinien oder Walzgerüsten eingesetzt.

Beim Kaltwalzen von Blechbändern oder Folienbändern verschiedener Art werden Messrollen eingesetzt, bei denen das Band mit einem gewissen Umschlingungswinkel unter Zug über eine Messrolle geführt wird, welche die Spannungsverteilung der Bänder über die Breite mittels der in der Rolle integrierten Sensoren ermittelt. Solche Messrollen verfügen in der Regel über eine Vielzahl von Sensoren, welche mit hoher Vorlast in zur Rollenoberfläche offenen radialen Bohrungen der Messrolle angeordnet sind, oder in achsparallelen Bohrungen dicht unter der Oberfläche der Messrolle positioniert sind.

Alternativ kann auch eine Spannhülse über die Rolle gespannt werden. In EP 0433535 wird ein Vorspannelement angegeben, welches mittels verstellbaren Keil die gewünschte Vorspannkraft erzeugt. Kennzeichnend für diese Kraftsensorsysteme ist, dass die Vorspannkraft ein Vielfaches der zu messenden Kraft des Bandes beträgt.

Erwärmt sich die Messrolle von aussen durch das heisse Band, kann dadurch eine Deformation der Rollengeometrie der Messrolle hervorgerufen werden, was zu einer Veränderung der Vorspannung führt. Die Veränderung der Vorspannung hat zur Folge, dass sich die Messempfindlichkeit der Sensoren verändert und dass die zuvor gemessenen Kalibrierwerte nicht mehr stimmen.

In der WO2004/065924 ist ein Vorspannelement für einen solchen Kraftsensor beschrieben, in der WO03/061856 sind ebenfalls die Vorspannvorrichtungen sowie die Einbauart beschrieben.

### Darstellung der Erfindung

In vielen Anwendungen entstehen im Betrieb grosse Temperaturdifferenzen in dem Messsystem, die eine Änderung der Vorlast der vorgespannten Sensoren erzeugen. Abhängig von der Ausführungsform des Systems zur Vorlasterzeugung resultiert aus der veränderten Vorlast eine mehr oder weniger starke Veränderung der zuvor bestimmten Kalibrierwerte. Diese Kalibrierwerte beschreiben die Empfindlichkeit des eingebauten Sensors im Kraftnebenschluss, wie er beispielsweise in einer Messrolle vorhanden ist.

Um eine hohe Messauflösung zu erreichen, besitzt der Ladungsverstärker, an dem die piezoelektrischen Kraftmesssensoren angeschlossen sind, eine hohe Verstärkung. Die Kraftmessung mit piezoelektrischen Sensoren hat die Eigenschaft, dass eine Kraftmessung mit hoher Auflösung trotz hoher Vorlast möglich ist, indem zu Beginn der Messung am Ladungsverstärker ein Reset durchgeführt wird. Dieser Reset hat zur Folge, dass die piezoelektrische Ladung des Sensors, die bei der Vorlast oder Vorspannkraft erzeugt wurde, elektrisch auf Null gesetzt wird und demzufolge die Information über die Höhe der Vorlast nicht mehr vorhanden ist. Ein ähnlicher Effekt tritt auf, wenn der Ladungsverstärker während einer Messung aus- und wieder eingeschaltet wird.

Aufgabe der vorliegenden Erfindung ist es, ein Verfahren anzugeben, welches erlaubt, trotz grosser Änderungen der Temperatur stets korrekte Kraftmessungen durchführen zu können.

Die Aufgabe wird gelöst durch die Kennzeichen des Anspruchs 1.

Die der Erfindung zugrunde liegende Idee besteht darin, dass das Kraftsensorsystem des Verfahrens der eingangs beschriebener Art zusätzlich zum bereits beschriebenen ersten Kraftsensor einen zweiten Kraftsensor umfasst, welcher ebenfalls mittels der Vorspannvorrichtung unter Vorspannung gesetzt werden kann. Erfindungsgemäss weist der erste Kraftsensor eine hohe Empfindlichkeit auf, welcher der erforderlichen Messempfindlichkeit der Anpresskraft durch das Folien- oder Blechbandes entspricht, und der zweite Kraftsensor ist ein statisch messender Kraftsensor.

Die Kennlinie der Empfindlichkeit im Kraftnebenschluss des ersten Kraftsensors in Abhängigkeit der Vorspannung ist dazu vorab bekannt.

Im erfindungsgemässen Verfahren erfolgt die Messung der beiden Kraftsensoren vorzugsweise nicht gleichzeitig sondern nacheinander in derart, dass der erste Sensor die eigentlich zu messende Kraft misst und der zweite Sensor die Vorspannung unmittelbar vor oder nach der Einwirkung dieser Kraft. Dies ist hilfreich, um die Überlagerung der zu messenden Kraft auf den zweiten Sensor zu vermeiden. Alternativ wäre auch möglich, das Signal des zweiten Sensors um den Wert der Kraft des ersten Sensors zu korrigieren. Aus dem Vorspannsignal des zweiten Kraftsensors wird, mittels der bekannten Kennlinie, schliesslich die aktuelle Empfindlichkeit des ersten Kraftsensors bestimmt. Auf Grund dieser aktuell ermittelten Empfindlichkeit wird schliesslich das erfasste Kraftsignal ausgewertet.

Ein entscheidender Vorteil dieses Verfahrens ist auch, dass auf Grund des erfindungsgemässen Verfahrens festgestellt werden kann, wenn die Vorspannung einen erforderlichen Grenzwert über- oder unterschritten hat, sodass die Kraftsignale nicht mehr sinnvoll ausgewertet werden können.

### Kurze Beschreibung der Zeichnungen

Im Folgenden wird die Erfindung unter Beizug der Zeichnungen näher erklärt. Es zeigen
- Fig. 1: eine perspektivische Darstellung einer Messrolle mit einem darüber laufenden Blechband oder Folienband;
- Fig. 2: eine perspektivische Darstellung einer Messrolle mit Kraftmesssensoren oder Kraftmesssystemen in dafür eingerichteten Bohrungen;
- Fig. 3: ein Kraftmesssystem in einer Bohrung im Längsschnitt;
- Fig. 4: ein Kraftmesssystem in einer Bohrung im Längsschnitt in einer bevorzugten Ausführungsform;
- Fig. 5: ein Kraftmesssystem in einer Bohrung einer Messrolle im Querschnitt;
- Fig. 6: Kennlinie der Empfindlichkeit des ersten Kraftsensors in Abhängigkeit der Vorspannung;
- Fig. 7: Zeitabhängige Signale beider Kraftsensoren sowie der Winkelstellung der Messrolle;
- Fig. 8: Kraftsensorsystem;
- Fig. 9: Messsignale des ersten (F1) und des (F2) Kraftsensors .

### Wege zur Ausführung der Erfindung

Die Bezugszeichen wurden in allen Zeichnungen beibehalten.

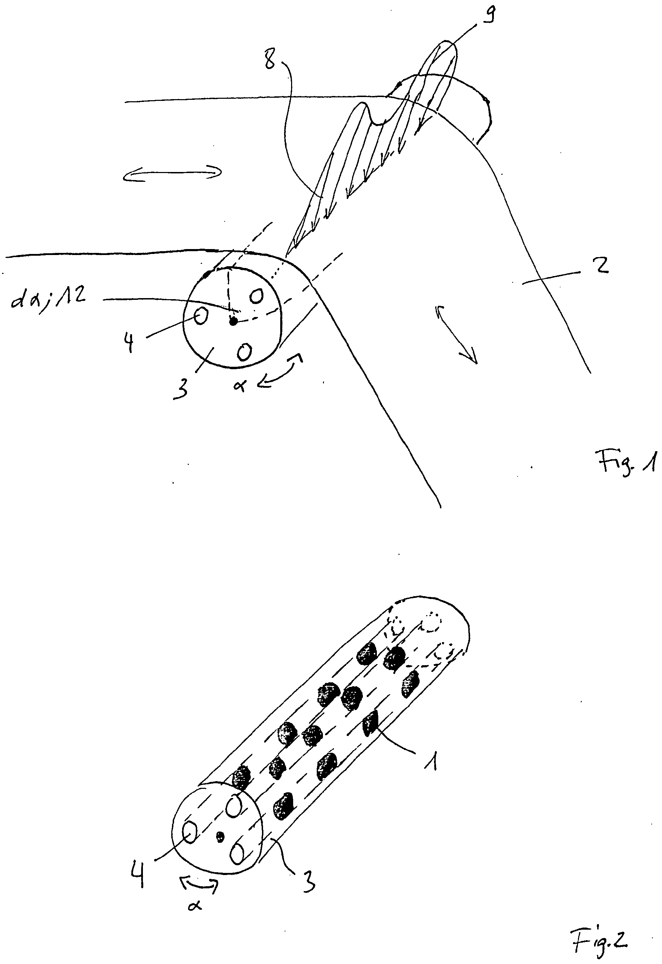

In Fig. 1 ist ein Blech- oder Folienband 2 dargestellt, welches über eine sich mitdrehende Messrolle 3 läuft. Das Band 2 umschliesst dabei einen gewissen Winkelsektor dα der Messrolle 3 und bewirkt in diesem Segment eine radial auf die Messrolle 3 wirkende Kraft F, dargestellt in Pfeilen. Durch die über die Breite der Messrolle 3 verteilt eingebauten Sensoren kann ein Kraftprofil 9 erstellt werden, welches auf die Planheit des Bandes 2 schliessen lässt.

In Fig. 2 ist eine solche Messrolle 3 nochmals ohne Band 2 dargestellt. Sie umfasst in der Regel mehrere Bohrungen 4, welche dicht unter der Oberfläche der Messrolle 3 angeordnet sind. Diese Bohrungen 4 sind über ihre gesamte Länge mit Kraftmesssensoren 5 bestückt, welche geeignet sind, die Kraft F vom Band 2 auf die Messrolle 3 in der erforderlichen Empfindlichkeit zu messen. Vorzugsweise werden dafür piezoelektrische Messsensoren 5 verwendet. Diese müssen unter hoher Vorspannung eingebaut werden, damit sie zuverlässig messen können.

Die Erwärmung oder Abkühlung der Messrolle 3 durch das Band 2 führt zu einer Ausdehnung der Messrolle 3 an der Oberfläche. Dies führt zu einer Veränderung der Vorspannung V, die wiederum eine Veränderung des Kraftnebenschlusses am Kraftsensor hervorruft. Da die Empfindlichkeit des Kraftsensors 5 von der jeweils vorherrschenden Kraftnebenschluss abhängig ist, verändern sich mit der Zeit die Kalibrierwerte des ersten Kraftsensors 5.

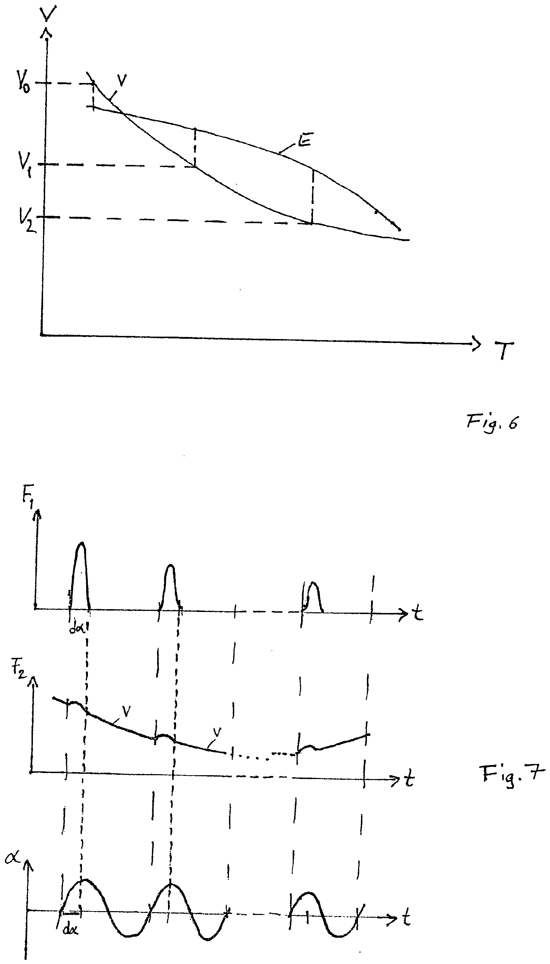

In Fig. 6 ist ein Beispiel der Vorspannung V in Abhängigkeit der Temperatur T der Messrolle 3 angegeben. Im selben Diagramm ist auch die Empfindlichkeit E bei der jeweiligen Vorspannung V angegeben. Entspricht die Vorspannung zwischen V0 bis V1 der Situation bei der Kalibrierung, dann ist der aktuelle Empfindlichkeit E entsprechend der Messung bei der Kalibrierung. In vielen Fällen wird die Kalibrierung in der Situation durchgeführt, bei der die Messrolle 3 Raumtemperatur besitzt. Die Anwendung der Messrolle 3 erfolgt aber bei stark schwankenden Temperaturen mit der Folge, dass die aktuelle Empfindlichkeit E von dem Wert der Kalibrierung abweicht.

Auf Grund der jeweils herrschenden Empfindlichkeiten E lassen sich schliesslich die Kalibrierwerte ermitteln, welche für die Auswertung der Messdaten erforderlich sind.

Um die jeweils vorherrschende Vorspannung ermitteln zu können, wird erfindungsgemäss ein zweiter Kraftsensor 6 zusammen mit dem ersten Kraftsensor 5 in einem Kraftsensorsystem 1 integriert. Dieser zweite Kraftsensor 6 soll erfindungsgemäss ein statisch messender Kraftsensor sein, der Kräfte über lange Zeiten zuverlässig messen kann. Erfindungsgemäss ist der zweite Sensor 6 ein resistiver, optischer oder resonanter Sensor. Insbesondere kann dies ein DMS Sensor sein.

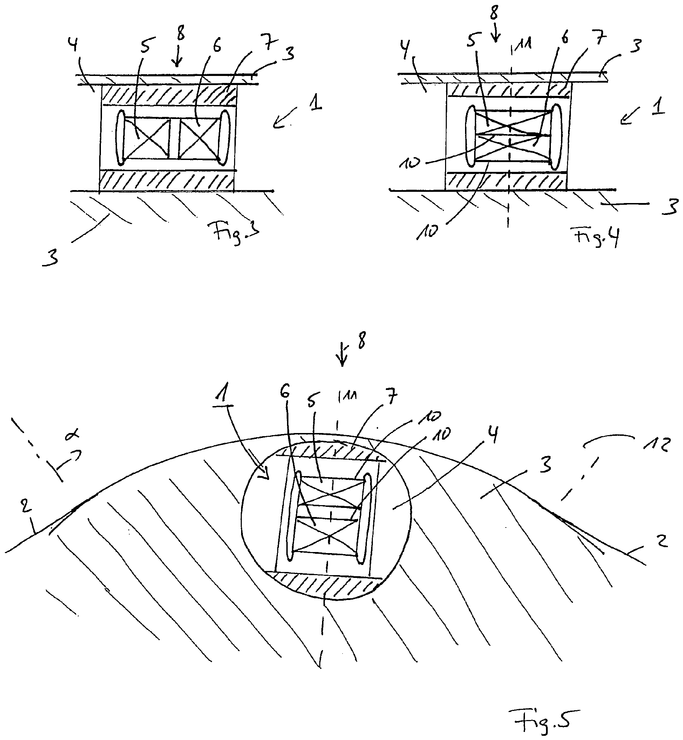

Zwei solche Beispiele von Kraftsensorsystemen 1 sind in den Figuren 3 und 4 angegeben.

In Fig. 3 sind die beiden Kraftsensoren 5, 6 nebeneinander angeordnet, bezogen auf die Achse 11 der Bohrung 4 resp. der Messrolle 3. Eine Vorspannvorrichtung 7 versetzt beide Kraftsensoren 5, 6 unter dieselbe Vorspannung.

In Fig. 4 sind die beiden Kraftsensoren 5, 6 übereinander angeordnet, bezogen auf die Krafteinleitungsrichtung 8, welche jeweils radial auf die Messrolle 3 wirkt. Eine Vorspannvorrichtung 7 versetzt auch hier beide Kraftsensoren 5, 6 unter dieselbe Vorspannung. Der Vorteil dieser Anordnung gegenüber der Anordnung in Fig. 3 ist, dass beide Kraftsensoren 5, 6 im selben Kraftfluss F liegen, sie sind somit in Serie eingebaut. So ist stets gewährleistet, dass die Vorspannung auf beiden Kraftsensoren 5, 6 identisch ist.

Die Kraftsensoren 5, 6 sind vorzugsweise beide als zylindrische Scheiben mit gleicher Grundfläche 10 ausgestaltet, wobei ihre Achsen 11 co-axial und radial zur Messrolle 3 angeordnet sind.

Dies vereinfacht die Umrechnung und verhindert ein Einschleichen weiterer Fehler ins System.

Fig. 5 zeigt die Anordnung von Fig. 4 im Querschnitt. Als Vorspannelement kann eines nach dem Stand der Technik verwendet werden, wie beispielsweise in der WO2004 /065924 beschrieben. In den vorliegenden Figuren wird nicht detailliert auf die Art der Vorspannung eingegangen. Es wird nur vermerkt, dass es unerlässlich ist, jedes einzelne Kraftsensorsystem 1, das in jede Bohrung 4 der Messrolle 3 eingebaut ist, mit genügend grosser Vorspannung zu versehen. Da jede Bohrung 4 mit einer Vielzahl von solcher Kraftsensorsysteme 1 bestückt werden muss, ist die Art der Anbringung der Vorspannung somit nicht unerheblich .

Zur Durchführung der Messung werden beide Signale beider Kraftsensoren 5, 6 ermittelt. Fig. 7 zeigt diese zeitabhängigen Signale F₁, F₂ des ersten und des zweiten Sensors 5, 6 in den beiden oberen Diagrammen. Zwischen den ersten zwei Signalen und dem letzten dargestellten Signal vergeht relativ viel Zeit, in der die Temperatur T der Messrolle 3 stark schwankt. Die Vorspannung V verhält sich dementsprechend, zuerst fallend, dann ansteigend. Das untere Diagramm zeigt die Winkelstellung α in Abhängigkeit der Zeit. Diese muss nicht extra ermittelt werden, aus Gründen der Anschaulichkeit ist diese hier aber mit dargestellt.

Die obere Kurve zeigt das Messsignal F₁ des ersten Kraftsensors 5, welches die Kraft des Bandes 2 auf die Messrolle 3 darstellt, während das Kraftsensorsystem 1 im Winkelsegment dα des Umschlingungswinkels 12 des Bandes 2 ist. Da dieser Kraftsensor 5 hochempfindlich sein muss, ist er vorzugsweise ein piezoelektrischer Kraftsensor. Dieser muss nach jeder Umdrehung mit einem Reset wieder auf null zurückgesetzt werden, wie aus der Grafik hervorgeht.

Die mittlere Kurve zeigt das Messsignal F₂ des zweiten Kraftsensors 6, dessen Empfindlichkeit um beispielsweise das hundertfache geringer ist als die des ersten Kraftsensors 5. Von diesem Signal wird nun die Vorspannkraft V entnommen. Dies ist die Kraft, die vorherrscht, während das Kraftsensorsystem 1 ausserhalb des Winkelsegments dα des Umschlingungswinkels 12 des Bandes 2 ist. Dieser jeweils konstante Wert ist die Vorspannkraft V.

Auf Grund der vorgängig ermittelten Kennlinie der Empfindlichkeit E des ersten Kraftsensors 5 in Abhängigkeit der Vorspannung V wird nun mittels der aktuell ermittelten Vorspannkraft des zweiten Kraftsensors 6 die aktuelle Empfindlichkeit E des ersten Kraftsensors 5 ermittelt. Das erfasste Kraftsignal kann nun in einer nicht dargestellten Auswerteeinheit auf Grund der aktuellen, ermittelten Empfindlichkeit E mit den richtigen Kalibrierwerten ausgewertet werden. Die Winkelstellung α der Messrolle 3 kann dazu entweder separat ermittelt werden oder sie kann aus dem Messsignal des zweiten Sensors 6 entnommen werden.

Insbesondere kann das Kraftsensorsystem 1 ein einziger Sensor sein, in dem die beiden Sensoren 5, 6 integriert sind. So kann der erste Sensor 5 auch ein dynamischer Kraftsensor und der zweite Sensor 6 ein Aktuator sein.

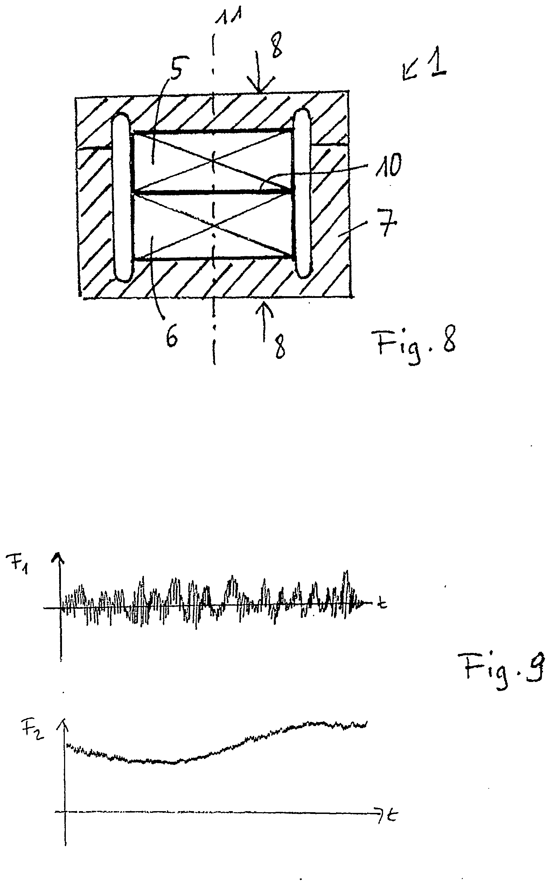

Ein weiterer Vorteil der vorliegenden Erfindung besteht darin, dass ein solches Kraftsensorsystem 1, wie es in Fig. 4 eingebaut oder in Fig. 8 als solcher dargestellt ist, auch für andere Anwendungen eingesetzt werden kann. Der statisch messende Sensor 6 kann dann jeweils die zur Zeit der Messung vorherrschende Vorlast messen, welche sich aus der Vorspannung V auf das Kraftsensorsystem 1 und einer zusätzlich statisch wirkenden Last zusammensetzen. Diese statische Last kann durch den Einbau in einem Bauteil 3 entstehen oder durch eine andere statische Last, die auf die Stelle des Kraftsensorsystems 1 wirkt. Ein Beispiel eines entsprechenden statischen Signals F2 ist in Fig. 9 dargestellt. Die Messzeiten bei solchen Anwendungen sind in der Regel sehr lang, es wird beispielsweise über Monate oder Jahre gemessen. Das dynamische Signal F1, das diesem statischen Signal F2 überlagert ist, ist ebenfalls in Fig. 9 dargestellt. Es wird mit dem zweiten Kraftsensor 6 zwar mitgemessen, doch da die Amplitude der F1 etwa um 6 Grössenordnungen geringer ist (10^6), ist das dynamische Signal F1 dem statischen Signal F2 nicht zu entnehmen.

Anwendungen sind insbesondere überall dort, wo das Kraftsensorsystem 1 über längere Zeit oder gar niemals mehr nicht erreicht werden kann, wie beispielsweise in Tauchbojen, Wetterstationen, Satelliten, Kernreaktoren, um nur eine kleine Auswahl anzugeben.

Das statische Signal F2, gemessen mit dem zweiten, statischen Sensor 6, kann insbesondere dafür verwendet werden, die Güte des dynamischen Signals F1, gemessen mit dem dynamischen, ersten Sensor 5, zu überprüfen. Sollte die Vorspannung V oder Vorlast, also die statische Last F2 unter einen kritischen Wert fallen, in dem die Empfindlichkeit E des ersten, dynamischen Sensors 5 nicht mehr im linearen Verhältnis zur Vorspannung V steht, so können die Messdaten des ersten Kraftsensors 5 noch anhand der bekannten Kennlinie mit korrigierten Referenzwerten ausgewertet werden. Sollte die Vorlast F2 aber zu stark sinken, so kann erkannt werden, dass die vom ersten Kraftsensor 5 gelieferten Daten nicht mehr verwertbar sind. Zu einem späteren Zeitpunkt, wenn F2 wieder höhere Werte liefert, kann erkannt werden, dass die Signale F1 wieder verwertet werden können.

Das Kraftsensorsystem 1 kann daher auch für andere Anwendungen als in der Folien- und Blechverarbeitung verwendet und in beliebigen Bauteilen 3 eingebaut werden. Die Vorspannvorrichtung kann durch das Bauteil aufgebracht werden.

### Bezugszeichenliste

- 1: Kraftsensorsystem
- 2: Band, Folien-, Blechband
- 3: Messrolle, Bauteil
- 4: Bohrung, zylindrisch
- 5: Erster Kraftsensor, piezoelektrischer Kraftsensor
- 6: Zweiter Kraftsensor, resistiver, optischer oder resonanter Kraftsensor
- 7: Vorspannvorrichtung
- 8: Krafteinleitungsrichtung auf die Messrolle
- 9: Kraftprofil
- 10: Grundfläche
- 11: Achsen
- 12: Umschlingungswinkel des Bandes
- α: Winkelstellung der Messrolle
- E: Empfindlichkeit
- V: Vorspannkraft, Vorspannung
- F: Kraft
- T: Temperatur der Messrolle
- t: Zeit

## Patentansprüche

1. Verfahren zum Messen von Kräften, welche von Folien- oder Blechbändern (2) beim Walzen in Walzgerüsten auf eine Messrolle (3) übertragen werden, mittels eines Kraftsensorsystems, das In einer zylindrischen Bohrung (4) der Messrolle (3) unter Vorspannung (V) eingesetzt ist und einen ersten Kraftsensor (5) sowie eine Vorspannvorrichtung (7) zum Erzeugen einer Vorspannung (V) auf den ersten Kraftsensor (5) aufweist, sodass der erste Kraftsensor (5) eine radial auf die Messrolle (3) auftretende Kraft (F) ermitteln kann und das einen zweiten Kraftsensor (6) umfasst, welcher ebenfalls mittels der Vorspannvorrichtung (7) unter Vorspannung (V) gesetzt werden kann, wobei der erste Kraftsensor (5) eine hohe Empfindlichkelt (E) aufweist, welcher der erforderlichen Messempfindlichkeit der Anpresskraft (F) des Folien- oder Blechbandes (2) entspricht, und ein zweiter Kraftsensor (6) ein statisch messender Kraftsensor ist, wobei eine Kennlinie der Empfindlichkeit (E) des ersten Kraftsensors (5) in Abhängigkeit der Vorspannung (V) bekannt ist, **dadurch gekennzeichnet,**
a) **dass** das Kraftsignal des ersten Kraftsensors (5) erfasst wird, während sich die Lage des Kraftsensorsystems innerhalb des Umschlingungswinkels (12) (dα) des Bandes (2) befindet,
b) **dass** das Vorspannsignal des zweiten Kraftsensors (6) erfasst wird, während sich die Lage des Kraftsensorsystems ausserhalb des Umschlingungswinkels (12) (dα) des Bandes (2) befindet,
c) **dass** aus dem Vorspannsignal des zweiten Kraftsensors (6) mittels der bekannten Kennlinie die aktuelle Empfindlichkeit (E) des ersten Kraftsensors (5) bestimmt wird,
d) und **dass** das erfasste Kraftsignal auf Grund der aktuellen, ermittelten Empfindlichkeit (E) ausgewertet wird.

2. Verfahren nach Anspruch 1, **dadurch gekennzeichnet, dass** zusätzlich die Winkelstellung (α) der Messrolle (3) erfasst wird.

## Claims

1. Method for measuring forces transferred to a measuring roll (3) from film strips or sheet metal strips (2) during rolling in roll stands by means of a force sensor system which is used at bias voltage (V) in a cylindrical hole (4) of the measuring roll (3) and has a first force sensor (5) and a bias voltage device (7) to generate a bias voltage (V) on the first force sensor (5) so that the first force sensor (5) can determine a radial force (F) occurring on the first measuring roll (3) and which comprises a second force sensor (6) which is also able to be used by means of the bias voltage device (7) at bias voltage (V), wherein the first force sensor (5) has a high sensitivity (E) corresponding to the required measurement sensitivity of the contact pressure (F) of the film strips or sheet metal strips (2), and a second force sensor (6) is a statically measuring force sensor, wherein the characteristic curve of the sensitivity (E) of the first force sensor (5) as a function of the bias voltage (V) is known, **characterised in that**
a) the force signal of the first force sensor (5) is acquired, during which the position of the force sensor system inside the wrap angle (12) (dα) of the strip (2) is located,
b) the bias voltage signal of the second force sensor (6) is acquired, during which the position of the force sensor system outside the wrap angle (12) (dα) of the strip (2) is located,
c) the current sensitivity (E) of the first force sensor (5) is determined from the bias voltage signal of the second force sensor (6) by means of the known characteristic curve,
d) and the acquired force signal is evaluated based on the current, determined sensitivity (E).

2. Method according to claim 1, **characterised in that** additionally the angular position (a) of the measuring roll (3) is acquired.

## Revendications

1. Procédé de mesure des forces qui sont transmises par des bandes de film ou de tôle (2) sur un cylindre de mesure (3) lors du laminage dans des cages de laminoir, au moyen d'un système de capteurs de force qui est inséré sous précontrainte (V) dans un alésage cylindrique (4) du cylindre de mesure (3) et qui présente un premier capteur de force (5) ainsi qu'un dispositif de précontrainte (7) destiné à produire une précontrainte (V) sur le premier capteur de force (5), de façon que le premier capteur de force (5) puisse déterminer une force (F) s'exerçant radialement sur le cylindre de mesure (3), et qui comprend un deuxième capteur de force (6) qui peut également être mis sous précontrainte (V) au moyen du dispositif de précontrainte (7), le premier capteur de force (5) présentant une sensibilité (E) élevée qui correspond à la sensibilité de mesure nécessaire de la force d'appui (F) de la bande de film ou de tôle (2) et un deuxième capteur de force (6) étant un capteur de force mesurant statiquement, une courbe caractéristique de la sensibilité (E) du premier capteur de force (5) en fonction de la précontrainte (V) étant connue, **caractérisé en ce**
a) **que** le signal de force du premier capteur de force (5) est détecté pendant que la position du système de capteurs de force se trouve à l'intérieur de l'angle d'enroulement 12 (dα) de la bande (2),
b) **que** le signal de précontrainte du deuxième capteur de force (6) est détecté pendant que la position du système de capteurs de force se trouve à l'extérieur de l'angle d'enroulement 12 (dα) de la bande (2),
c) **que** la sensibilité actuelle (E) du premier capteur de force (5) est déterminée à partir du signal de précontrainte du deuxième capteur de force (6) au moyen de la courbe caractéristique connue,
d) et **que** le signal de force détecté est évalué sur la base de la sensibilité actuelle (E) déterminée.

2. Procédé selon la revendication 1, **caractérisé en ce que** la position angulaire (A) du cylindre de mesure (3) est détectée en plus.
